# EUROPÄISCHE PATENTSCHRIFT

(11) **EP 1 091 538 B1**
(45) Veröffentlichungstag und Bekanntmachung des Hinweises auf die Patenterteilung: **05.11.2008**
(21) Anmeldenummer: 00121144.0
(22) Anmeldetag: 28.09.2000
(51) Int. Cl.: H04M 1/00, H04Q 11/04

(54) **ISDN-Gerät mit "Plug-and-Play"-Funktion, Verfahren zum Abspeichern einer "Multiple Subscriber Number" in dem ISDN-Gerät und dessen Verwendung**
ISDN apparatus with a Plug-and-Play function , Method for storing a "Multiple Subscriber Number" in an ISDN apparatus and use of same
Appareil ISDN avec fonction "Plug-and-Play" , Méthode de stockage d'un numéro d'abonné multiple dans un appareil ISDN et utilisation du même

(30) Priorität: 06.10.1999 DE 19948098
(43) Veröffentlichungstag der Anmeldung: 11.04.2001
(73) Patentinhaber: Siemens Home and Office Communications Devices GmbH & Co. KG, 81379 München (DE)
(72) Erfinder: van de Logt, Marco, 47574 Goch (DE)
(74) Vertreter: Maier, Daniel Oliver

(56) Entgegenhaltungen:
- EP-A- 0 658 034
- EP-A- 1 189 416
- DE-A- 19 630 456
- "Integrated Services Digital Network (ISDN);Diversion supplementary services; Digital Subscriber Signalling System No. one (DSS1) protocol; Part 1: Protocol specification" EN 300 207-1 V1.2.5, XX, XX, 30. Oktober 1998 (1998-10-30), Seiten 1-93, XP002237578
- ETSI: "ETS 300 200, Integrated Services Digital Network (ISDN);Call Forwarding Unconditional (CFU) supplementary service; Service description" ETS 300 200, XX, XX, Dezember 1994 (1994-12), Seiten 1-24, XP002233697

## Beschreibung

Die Erfindung befaßt sich mit einem ISDN-Gerät, in dem mindestens eine "Multiple Subscriber Number" abspeicherbar ist, mit einem Verfahren zum Abspeichern einer "Multiple Subscriber Number" in einem ISDN-Gerät sowie einer Verwendung eines ISDN-Geräts zur Durchführung dieses Verfahrens.

Bekannt ist es, die Abspeicherung von "Multiple Subscriber Numbers (MSN)", die innerhalb eines ISDN-Geräts an einem So-Bus zur Verfügung stehen, per Hand durch den Benutzer einzugeben. Dies geschieht beispielsweise dadurch, daß der Benutzer die entsprechenden Codes mittels der Tasten des ISDN-Geräts oder einem an das ISDN-Gerät angeschlossenen PC vornimmt. Dies ist sehr umständlich und zeitaufwendig. Außerdem ist dadurch die Gefahr gegeben, daß die MSN falsch programmiert werden.

Aus der EP 0 658 034 B1 ist ein Endgerät mit einer Sende/Empfangseinrichtung, einer "Call Forwarding"-Einrichtung und einem Speicher bekannt. Die "Call Forwarding"-Einrichtung nimmt die Anforderung der Rufweiterleitung für das ISDN-Endgerät von einem beliebigen entfernten Anschluss entgegen und sendet entsprechende Steuersignale an eine zugehörige ISDN-Vermittlungsstelle. Zudem ist die Abfrage der aktuellen Einstellung der Rufweiterleitung von jedem beliebigen entfernten Anschluss möglich.

Aus der Druckschrift "Integrated Services Digital Network (ISDN); Diversion Supplementary Services; Digital Subscriber Signalling System No. one (DSS1) Protocol; Part 1: Protocol Specification", ETSI EN 300 207-1, V1.2.5 (Oktober 1998), Seiten 1 bis 93 sind die für die Aktivierung, Deaktivierung und Rufnummernabfrage des Leistungsmerkmals "Rufweiterleitung" im ISDN-Protokoll DSS1 vorgesehenen Signalisierungsprozeduren bekannt.

Aufgabe der Erfindung ist es, ein ISDN-Gerät und ein Verfahren zur Verfügung zu stellen, mit denen eine einfache und zuverlässige Programmierung der MSN an einem ISDN-Gerät erreicht wird.

Die Aufgabe wird gelöst durch ein ISDN-Gerät mit "Plug-and-Play"-Funktion, umfassend eine "Call-Forwarding"-Einrichtung zur Rufweiterleitung, eine Speichereinrichtung zur Speicherung von MSN, einer Sende- und Empfangseinrichtung zur Kommunikation mit einem ISDN-Amt, mittels der eine "Interrogate Served User Numbers"-Meldung in Richtung ISDN-Amt versendbar ist, wobei eine Rufweiterleitung über die "Call-Forwarding"-Einrichtung für mindestens eine MSN aktivierbar ist, eine Abfrage des ISDN-Amtes durchzuführen ist, bei der das ISDN-Amt die angeforderten MSN überträgt, die so erhaltenene Nummer in der Speichereinrichtung abspeicherbar und die Rufweiterleitung daraufhin deaktivierbar ist.

Ein solches erfindungsgemäßes ISDN-Gerät ist somit in der Lage, sich selbst zu programmieren, so daß der Benutzer des ISDN-Gerät die einzelnen MSN nicht von Hand programmieren muß. Dabei ist eine zuverlässige Programmierung über eine direkte Kommunikation mit dem ISDN-Amt gewährleistet. Mit dem erfindungsgemäßen ISDN-Gerät ist eine Benutzung nach dem sogenannten "Plug-and-Play"-Verfahren möglich, d.h., der Benutzer steckt das ISDN-Gerät einfach an den S₀-Bus des ISDN-Anschlusses an und kann ohne weiteren Aufwand auf die automatisch programmierten MSN zurückgreifen.

Desweiteren wird die Aufgabe gelöst durch ein Verfahren zum Abspeichern von mindestens eines MSN in einem ISDN-Gerät nach Anspruch 1.

Durch das erfindungsgemäße Verfahren, das sich der standardmäßig in einem ISDN-Gerät zur Verfügung gestellten "Call-Forwarding"-Einrichtung bedient, ist es nicht nötig, eine weitere Funktion zur Verfügung zu stellen, die aufwendig und teuer zu realisieren ist. Durch die Kommunikation mit dem ISDN-Amt zum Abfragen der mindestens einen gültigen MSN, für die die "Call-Forwarding"-Einrichtung aktiviert wurde, wird eine zuverlässige Programmierung der MSN am ISDN-Gerät erreicht. Nachdem die MSN im ISDN-Gerät abgespeichert wurden und somit zur Verfügung stehen, wird die "Call-Forwarding"-Einrichtung wieder deaktiviert, so daß eine normale Benutzung des ISDN-Geräts möglich ist.

Desweiteren wird die Aufgabe durch die Verwendung eines ISDN-Geräts, insbesondere eines erfindungsgemäßen ISDN-Geräts, zur Durchführung des oben genannten, insbesondere eines erfindungsgemäßen Verfahrens gelöst.

Vorteilhafte Weiterbildungen der Erfindung sind Gegenstand der Unteransprüche.

Weitere Vorteile und Einzelheiten der Erfindung sind Gegenstand der anhand der Figuren beschriebenen Ausführungsbeispiele. Es zeigen:
Figur 1 eine schematische Darstellung eines bevorzugten Ausführungsbeispiels einer Vorrichtung gemäß der Erfindung und
Figur 2 ein Flußdiagramm eines bevorzugten Ausführungsbeispiels eines Verfahrens gemäß der Erfindung.

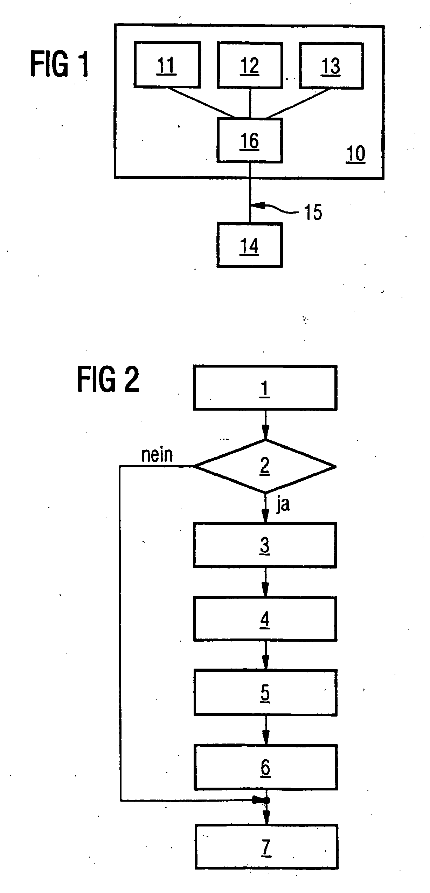

In Figur 1 ist ein ISDN-Gerät 10 gezeigt, das folgende Einrichtungen aufweist: Eine Steuereinrichtung 16, eine "Call-Forwarding"-Einrichtung 11, eine Speichereinrichtung 12 und eine Sende-und Empfangseinrichtung 13. Die Steuereinrichtung 16 des ISDN-Geräts 10 ist über einen ISDN-Sₒ-Bus 15 mit einem ISDN-Amt 14 verbunden. Die Steuereinrichtung 16 ist jeweils über eine Leitung mit der "Call-Forwarding"-Einrichtung 11, der Speichereinrichtung 12 und der Sende- und Empfangseinrichtung 13 verbunden. Über diese Leitungen ist ein Datenaustausch zwischen den jeweiligen Einrichtungen möglich. Durch das in Figur 1 dargestellte, über den ISDN-S₀-Bus 15 mit dem ISDN-Amt 14 verbundenen ISDN-Gerät 10 ist die Durchführung eines erfindungsgemäßen Verfahrens möglich.

Figur 2 zeigt ein bevorzugtes Ausführungsbeispiel, das folgende Schritte aufweist:
In Schritt 1 wird ein ISDN-Gerät an einen S₀-Bus einer ISDN-Leitung angeschlossen.
In Schritt 2 findet eine Abfrage statt, ob das ISDN-Gerät zum ersten Mal an den S₀-Bus eingesteckt wird oder nicht. Wird dies verneint, so wird unter Auslassung der Schritte 3 bis 6 sofort der unten näher beschriebene Schritt 7 ausgeführt.

Wird die Frage dagegen bejaht, so wird in Schritt 3 automatisch die Rufweiterleitung, das "Call-Forwarding", für alle am S₀-Bus gültigen MSN mittels der ISDN-Meldung "Activation Diversion" und "Served User Nr.: all numbers" initiiert.

Daran anschließend wird mittels der ISDN-Meldung "Interrogate Served User Numbers" in Schritt 4 eine Abfrage in Richtung ISDN-Amt versendet. Dadurch wird das ISDN-Amt aufgefordert, alle gültigen MSN zu senden, für die eine Rufweiterleitung in Schritt 3 eingerichtet wurde.

Das ISDN-Amt reagiert auf diese Abfrage dadurch, daß sie dem ISDN-Gerät die nachgefragten MSN übermittelt, woraufhin diese in Schritt 5 im ISDN-Gerät empfangen und abgespeichert werden.

Daran anschließend wird in Schritt 6 die Rufweiterleitung mittels der ISDN-Meldung "Deactivation Diversion" wieder deaktiviert.

Das ISDN-Gerät ist sodann in Schritt 7 betriebsbereit und stellt dem Benutzer sämtliche gültigen MSN zur Verfügung, die er dann abrufen kann.

Bei dem oben beschriebenen Verfahren handelt es sich nur um ein beispielhaftes Verfahren, das keinesfalls beschränkend ist und durch mannigfaltige Veränderungen modifizierbar ist.

So kann bspw. in Schritt 2 die Abfrage, ob das ISDN-Gerät zum ersten Mal an den S₀-Bus eingesteckt wird oder nicht, auch weggelassen werden, so daß auf alle Fälle die Schritte 3 bis 6 durchlaufen werden müssen. Dadurch wird jedesmal wieder aufs neue das gesamte Verfahren durchlaufen, was zwar zeitaufwendiger ist, als wenn dies nur beim erstmaligen Anschließen des ISDN-Geräts an den S₀-Bus vorgenommen wird. Dadurch wird jedoch gewährleistet, daß keine ungewollte Veränderung der MSN unbemerkt geschehen kann.

Außerdem kann die Abfrage in Schritt 2 auch nur auf aktives Verlangen des Bedieners geschehen, beispielsweise durch einen Knopfdruck. Dadurch wird der Bediener selbst in die Lage versetzt, zu entscheiden, ob er die Durchführung des Verfahrens wünscht oder nicht.

Außerdem ist es möglich, daß im Schritt 3 die Rufweiterleitung nicht für sämtliche am S₀-Bus gültigem MSN automatisch aktiviert wird, sondern nur für eine oder eine vorherbestimmte Anzahl von MSN. Dadurch kann der Bediener selbst entscheiden, welche MSN er mitgeteilt bekommen möchte und welche nicht. Er kann dann in einem iterativen Verfahren auch die anderen, im vorhergehenden Verfahren nicht bestimmten MSN durch mehrmalige Anwendung des Verfahrens abspeichern, so daß sie ihm dann zur Verfügung stehen.

Durch jedes erfindungsgemäße Verfahren bzw. ISDN-Gerät wird dem Bediener somit eine "Plug-and-Play"-Funktion zur Verfügung gestellt, wobei er sofort und automatisch auf sämtliche gültigen MSN zurückgreifen kann. Dadurch wird ihm ein umständliches und zeitaufwendiges, möglicherweise auch falsches Programmieren der gültigen MSN erspart und er kann sofort nach Anschließen des ISDN-Geräts am S₀-Bus sämtliche Vorzüge des ISDN-Geräts in Anspruch nehmen.

Die Erfindung sieht vor, daß in einem ISDN-Gerät eine "Plug-and-Play"-Funktion ausgeführt wird. Bei dieser "Plug-and-Play"-Funktion wird nach dem Anschließen des ISDN-Geräts an einem ISDN-S₀-Bus automatisch eine "Call-Forwarding"-Einrichtung für mindestens eine gütlige "Multiple Subscriber Number" aktiviert. Im Anschluß daran wird eine Abfrage an ein ISDN-Amt durchgeführt, bei der das ISDN-Amt die "Multiple Subscriber Numbers" überträgt, für die eine Rufweiterleitung aktiviert wurde. Die so erhaltenen Nummern werden im ISDN-Gerät abgespeichert und die "Call-Forwarding"-Funktion deaktiviert. Dem Benutzer stehen danach automatisch diese "Multiple Subscriber Numbers" zur Verfügung, ohne daß er sie von Hand programmieren muß.

## Patentansprüche

1. ISDN-Gerät mit "Plug-and-Play"-Funktion, umfassend eine "Call-Forwarding"-Einrichtung zur Rufweiterleitung, eine Speichereinrichtung zur Speicherung von mindestens einer Multiple Subscriber Number, einer Sende- und Empfangseinrichtung zur Kommunikation mit einem ISDN-Amt, die eine "Interrogate Served User Numbers"-Meldung in Richtung ISDN-Amt versendet,
**dadurch gekennzeichnet,**
**daß** das Gerät eine Rufweiterleitung über die "Call-Forwarding"-Einrichtung für mindestens eine "Multiple Subscriber Number" aktiviert, daß das Gerät eine Abfrage des ISDN-Amtes durchführt, bei der das ISDN-Amt die angeforderten "Multiple Subscriber Numbers" überträgt, daß das Gerät die so erhaltenen Nummern in der Speichereinrichtung abspeichert und daß das Gerät die Rufweiterleitung daraufhin deaktiviert.

2. Verfahren zum Abspeichern von mindestens einer Multiple Subscriber Number beim Installieren eines ISDN-Geräts an einem ISDN-S₀-Bus mit folgenden Schritten:
Automatisches Aktivieren eines "Call-Forwarding" für mindestens eine gültige "Multiple Subscriber Number" am ISDN-S₀-Bus;
Abfragen der mindestens einen gültigen "Multiple Subscriber Number" vom ISDN-Amt, für die ein "Call-Forwarding" aktiviert wurde;
Abspeichern und zur Verfügung stellen der vom ISDN-Amt erhaltenen mindestens einen gültigen "Multiple Subscriber Number"; und
Deaktivieren des "Call-Forwarding".

3. Verfahren nach Anspruch 2,
**dadurch gekennzeichnet,**
**daß** es nur beim erstmaligen Installieren des ISDN-Geräts am ISDN-S₀-Bus ausgeführt wird.

4. Verfahren nach Anspruch 2 oder 3,
**dadurch gekennzeichnet,**
**daß** das automatische Aktivieren des "Call-Forwarding" für alle gültigen "Multiple Subscriber Numbers" ausgeführt wird.

5. Verwendung eines ISDN-Geräts zur Durchführung eines Verfahrens nach einem der Ansprüche 2 bis 4.

6. Verwendung nach Anspruch 5,
**dadurch gekennzeichnet,**
**daß** ein ISDN-Gerät gemäß dem Anspruch 1 verwendet wird.

## Claims

1. ISDN apparatus with plug-and-play function, comprising a call forwarding device for call forwarding, a memory device for storing at least one Multiple Subscriber Number, a transmit and receive device for communication with an ISDN exchange which sends an "Interrogate Served User Numbers" message in the direction of the ISDN exchange,
**characterised in that**
call forwarding is activated via the call forwarding device for at least one Multiple Subscriber Number", that the device performs an interrogation of the ISDN exchange, in which the ISDN exchange transfers the required Multiple Subscriber Numbers, that the device stores the numbers thus obtained in a memory device and that the device then deactivates the call forwarding.

2. Method for storing at least one Multiple Subscriber Number on installation of an ISDN device on an ISDN So bus with the following steps:
Automatic activation of call forwarding for at least one valid Multiple Subscriber Number on the ISDN So bus;
Requesting the at least one valid Multiple Subscriber Number from the ISDN exchange for which call forwarding was activated;
Storage and making available of the at least one valid Multiple Subscriber Number received from the ISDN exchange und Deactivation of the call forwarding.

3. Method according to claim 2,
**characterised in that**
it is only executed the first time that the ISDN device is connected to the ISDN So bus.

4. Method according to claim 2 or 3,
**characterised in that**
the automatic activation of the call forwarding" is executed for all valid Multiple Subscriber Numbers.

5. Use of an ISDN device for executing a method according to one of the claims 2 to 4.

6. Use according to claim 5
**characterised in that**
an ISDN device in accordance with claim 1 is used.

## Revendications

1. Appareil ISDN avec fonction « Plug-and-Play », comprenant un dispositif de « Call Forwarding » pour le renvoi d'appels, un dispositif de mémorisation pour mémoriser au moins un Multiple Subscriber Number, un dispositif d'émission et de réception pour la communication avec un central ISDN, qui émet un message « Interrogate Served User Numbers » en direction du central ISDN,
**caractérisé en ce**
**que** l'appareil active un renvoi d'appel par l'intermédiaire du dispositif de « Call Forwarding » pour au moins un « Multiple Subscriber Number », en ce que l'appareil réalise une interrogation du central ISDN, lors de laquelle le central ISDN transmet les « Multiple Subscriber Numbers » demandés, en ce que l'appareil mémorise dans le dispositif de mémorisation les numéros ainsi obtenus et en ce que l' appareil désactive ensuite le renvoi d'appels.

2. Procédé de mémorisation d'au moins un Multiple Subscriber Number lors de l'installation d'un appareil ISDN sur un bus ISDN-S₀, comprenant les étapes suivantes :
activation automatique d'un « Call Forwarding » pour au moins un « Multiple Subscriber Number » valide sur le bus ISDN-S₀ ;
interrogation par le central ISDN de l'au moins un « Multiple Subscriber Number » valide, pour lequel un « Call Forwarding » a été activé ;
mémorisation et mise à disposition de l'au moins un « Multiple Subscriber Number » valide, obtenu par le central ISDN ; et
désactivation du « Call Forwarding ».

3. Procédé selon la revendication 2,
**caractérisé en ce**
**qu'**il est exécuté seulement lors de l'installation initiale de l'appareil ISDN sur le bus ISDN-S₀.

4. Procédé selon la revendication 2 ou 3,
**caractérisé en ce**
**que** l'activation automatique du « Call Forwarding » est exécutée pour tous les « Multiple Subscriber Numbers » valides.

5. Utilisation d'un appareil ISDN pour la réalisation d'un procédé selon l'une quelconque des revendications 2 à 4.

6. Utilisation selon la revendication 5,
**caractérisée en ce**
**qu'**un appareil ISDN selon la revendication 1 est utilisé.
